# FASCICULE DE BREVET EUROPEEN

(11) **EP 1 209 757 B1**
(45) Date de publication et mention de la délivrance du brevet: **14.04.2004**
(21) Numéro de dépôt: 01402892.2
(22) Date de dépôt: 09.11.2001
(51) Int. Cl.: H01Q 1/00, H01Q 1/22, B01L 1/00

(54) **Ensemble comportant une enceinte et un système de communication par ondes radiofréquences avec des objets dans l'enceinte**
Anordnung mit einem Arbeitsraum und Funksystem für Kommunikation mit Gegenständen die sich im Arbeitsraum befinden
Assembly with a work space and a system for radio communication with objects placed in the work space

(30) Priorité: 27.11.2000 FR 0015287
(43) Date de publication de la demande: 29.05.2002
(73) Titulaire: Jouan, 44800 Saint Herblain (FR)
(72) Inventeur: Benezech, Philippe, 44300 Nantes (FR); Bru, Olivier, 44700 Orvault (FR)
(74) Mandataire: Domenego, Bertrand

(56) Documents cités:
- EP-A- 0 869 625
- WO-A-00/33005
- WO-A-94/27117
- WO-A-97/28591
- GB-A- 2 308 947
- US-A- 5 969 606

## Description

La présente invention concerne un ensemble selon le préambule de la revendication 1.

L'invention s'applique en particulier au traitement de matières ou d'échantillons biologiques et notamment à la culture, à la conservation et/ou à l'analyse de cellules et/ou microorganismes.

WO-97/28 591 décrit une installation de distribution électrique isolée au gaz dont un compartiment blindé contient du gaz et des capteurs communiquant par ondes radiofréquences avec une antenne disposée à l'extérieur du compartiment.

EP-869 625 décrit un réseau sans fil de communication d'informations entre des dispositifs électroniques placés dans des pièces différentes.

WO-94/27 117 décrit un système de sécurité utilisant les ondes radio-fréquences pour garantir qu'un réceptacle d'objets de valeur n'a pas été ouvert.

On connaît du document WO-00/33 005 un ensemble selon le préambule de la revendication 1 dans lequel l'enceinte est une enceinte thermostatée, par exemple réfrigérée, et les objets sont des récipients contenant des échantillons biologiques. Ces récipients sont munis de transpondeurs radiofréquences d'identification des échantillons qu'ils contiennent. Le système de communication par ondes radiofréquences permet d'identifier les échantillons introduits dans l'enceinte en vue du contrôle de son contenu, mais également de fournir aux transpondeurs radiofréquences portés par les récipients des informations sur le traitement que les échantillons ont subis dans l'enceinte, par exemple un cycle thermique. Le système de communication de ce document comprend des antennes placées chacune sur une étagère disposée dans l'espace de travail.

On constate que dans une telle enceinte les antennes, et leurs connexions au reste du système de communications, peuvent être soumises à des conditions de température, d'humidité, de pression ou à des environnements qui peuvent nuire au bon fonctionnement et à la fiabilité du système de communication.

De plus, le nettoyage et la décontamination des surfaces délimitant l'espace de travail sont gênés par les antennes. Or, un tel nettoyage et une décontamination s'imposent régulièrement pour les applications citées ci-dessus.

Un but de l'invention est de résoudre ce problème en fournissant un ensemble du type précité qui permette de faciliter le nettoyage et la décontamination de l'espace de travail de l'enceinte.

A cet effet, l'invention a pour objet un ensemble selon la revendication 1.

Les revendications dépendantes concernent des modes particuliers de réalisation.

L'invention sera mieux comprise à la lecture de la description qui va suivre, donnée uniquement à titre d'exemple, et faite en se référant aux dessins annexés sur lesquels :
- la figure 1 est une vue schématique de dessus d'un ensemble selon l'invention, la paroi supérieure de l'enceinte n'ayant pas été représentée, et
- la figure 2 est une section schématique partielle illustrant la structure de la porte de l'enceinte d'une variante de l'ensemble de la figure 1.

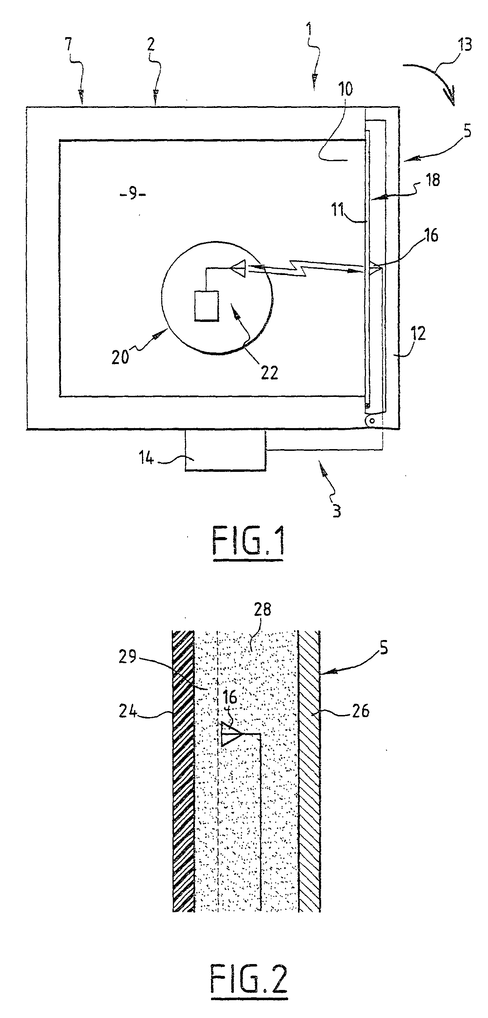

La figure 1 représente un ensemble 1 comprenant une enceinte thermostatée 2 pour le traitement d'échantillons biologiques, et un système 3 de communication d'informations par ondes radiofréquences.

On rappelle que les ondes radiofréquences sont des ondes électromagnétiques. Dans les exemples décrits ci-dessous, les fréquences des ondes qui peuvent être utilisées seront par exemple de 125 kHz, 13,56 MHz et 2,45 GHz. Toutefois, d'autres fréquences peuvent bien sûr être envisagées.

L'enceinte 2 a une forme sensiblement parallélépipédique et comprend quatre parois latérales dont une première, désignée par la référence 5, forme une double porte avant. Les autres parois latérales de l'enceinte 2 et ses parois inférieure et supérieure forment une cuve 7.

Les parois de l'enceinte 2 délimitent intérieurement un espace confiné de travail 9, propre à la mise en oeuvre d'un travail.

La face avant de la cuve 7 est ouverte pour former une ouverture 10 d'accès à l'espace de travail 9, qui peut être obturée et/ou libérée par la paroi 5.

Plus précisément, la paroi 5 comprend une première porte intérieure 11 et une deuxième porte extérieure 2.

La première porte 11 est par exemple réalisée en verre ou en plexiglas (marque déposée). Le deuxième porte 12 a par exemple, comme les parois formant la cuve 7, une structure à double enveloppe comprenant un panneau intérieur en matière plastique, un panneau extérieur métallique, et une couche d'un matériau thermiquement isolant disposée entre les panneaux intérieur et extérieur.

Les deux portes 11 et 12 sont articulées sur un même côté de la cuve 7 pour pouvoir s'ouvrir indépendamment par rotation dans le sens de la flèche repérée par la référence 13 sur la figure 1. L'ouverture de la porte 12 seule permet de contrôler visuellement, au travers de la porte 11 transparente aux ondes optiques, le déroulement de l'opération mise en oeuvre dans l'espace de travail 9.

L'enceinte 2 est en outre munie de moyens de chauffage non représentés pour constituer une étuve.

Le système 3 comprend une unité de communication et de traitement d'informations 14 et au moins une antenne 16 raccordée électriquement à l'unité 14.

De manière classique, l'unité 14 peut comprendre un calculateur, des moyens de stockage de données sous forme de toute mémoire appropriée, une horloge, et un module d'émission et de réception d'ondes radiofréquences.

L'antenne 16 qui est une antenne classique est portée par la surface extérieure 18 de la porte intérieure 11, sur laquelle elle est par exemple collée. Ainsi, l'antenne 16 est disposée à l'extérieur de l'espace de travail 9 et en est isolée par toute l'épaisseur de la porte intérieure 11 qui forme une cloison de séparation de l'antenne 16 de l'espace 9.

Lorsqu'un récipient 20, contenant un échantillon biologique et équipé d'un transpondeur radiofréquences 22 d'identification accordé avec le module radiofréquences de l'unité 14, est placé dans l'espace de travail 9, l'antenne 16 peut échanger par ondes radiofréquences des informations avec le transpondeur 22, puisque la porte intérieure 11 qui sépare l'antenne 16 de l'espace de travail 9 est entièrement transparente aux ondes radiofréquences utilisées par le système de communication 3.

Ainsi, le système de communication 3 peut interroger le transpondeur 22 et recevoir en réponse l'identifiant de l'échantillon contenu dans le récipient 20, mais également échanger de manière classique toute autre information avec le transpondeur 22, par exemple en lui fournissant des informations concernant le cycle thermique que l'échantillon subi à l'intérieur de l'enceinte 2.

L'antenne 16 étant isolée de l'espace de travail 9 et donc de son atmosphère, elle n'est pas soumise aux conditions physiques et chimiques auxquelles l'échantillon du récipient 20 est soumis. Ainsi, l'antenne 16 est protégée des agressions physiques et chimiques et le système de communication 3 fonctionne de manière satisfaisante.

De plus, le nettoyage de l'enceinte 2 et notamment des surfaces intérieures des parois délimitant l'espace de travail 9 est facilité.

Enfin , la position de l'antenne 16 facilite également son raccordement à l'unité 14 puisqu'il n'est pas nécessaire de traverser entièrement, c'est à dire sur toute son épaisseur, une paroi de l'enceinte 2, pour assurer un tel raccordement.

Dans la variante de la figure 2, l'enceinte 2 constitue par exemple un réfrigérateur et la paroi 5 est une simple porte à structure à double enveloppe. La paroi mobile ou porte 5 comprend ainsi un panneau intérieur 24, un panneau extérieur 26 et une couche 28 d'un matériau thermiquement isolant disposée entre les panneaux 24 et 26.

Le panneau intérieur 24 est par exemple réalisé en une matière plastique et la couche 28 par exemple en mousse de polyuréthane, ces deux matériaux étant transparents aux ondes radiofréquences utilisées par le système de communication 3 et par les transpondeurs 22 des récipients 20 destinés à être placés dans l'enceinte 2.

Le panneau extérieur 26 est par exemple réalisé en métal.

L'antenne 16 est disposée dans la paroi 5, entre les panneaux 24 et 26, à proximité du panneau 24. L'antenne 16 est noyée dans la couche 28. Dans une variante elle peut être en contact avec le panneau intérieur 24.

L'antenne 16 est isolée de l'atmosphère de l'espace de travail 9 par le panneau intérieur 24 de la paroi 5 et une région intérieure 29 (dont une limite est représentée en pointillés) de la couche 28, ce qui permet de limiter les agressions physiques et chimiques de l'antenne 16 et de faciliter le nettoyage de l'enceinte 2. En particulier, la présence de la région 29, en plus du panneau 24 qui forme cloison de séparation, permet d'isoler thermiquement efficacement l'antenne 16 et ses connexions électriques de l'atmosphère de l'espace de travail 9. Ainsi, le système 3 fonctionne de manière fiable et satisfaisante même si la température régnant dans l'espace 9 atteint par exemple -80°C.

Dans d'autres variantes non représentées, la ou chaque antenne 16 peut être disposée sur ou dans une autre paroi de l'enceinte 2 que la paroi mobile 5. Il peut s'agir par exemple de la paroi latérale arrière opposée à la paroi mobile 5.

Par ailleurs, il n'est pas nécessaire que la partie de cette paroi située entre la ou chaque antenne 16 et l'espace de travail 9 soit transparente, sur toutes ses dimensions transversales, aux ondes radiofréquences utilisées. Ainsi, seule la partie de la paroi considérée située en regard de l'antenne 16, c'est à dire disposée dans le cône de réception et d'émission de la ou de chaque antenne 16, peut être transparente aux ondes radiofréquences utilisées.

Dans encore une autre variante, l'antenne 16 peut être disposée à l'extérieur de l'enceinte 2 sur la surface extérieure d'une de ses parois qui est transparente sur toute son épaisseur aux ondes radiofréquences utilisées.

Enfin, on conçoit que les principes ci-dessus peuvent s'appliquer à des ensembles 1 dont les systèmes de communications 3 assurent l'émission et la réception d'informations par ondes radiofréquences, l'émission seule ou la réception seule.

On conçoit également que les principes ci-dessus s'appliquent à tous types d'enceinte de travail, thermostatée ou non, et notamment aux incubateurs, aux étuves et aux réfrigérateurs.

On entend par enceinte thermostatée une enceinte permettant de maintenir la température à l'intérieur de son espace de travail sensiblement constante. Ce terme couvre donc notamment une enceinte à parois isolantes et contenant une source de froid, telle que de la glace ou de la carboglace (marque déposée), ou une source de chaleur, pour maintenir sa température intérieure sensiblement constante.

De manière plus générale, le travail mis en oeuvre dans l'enceinte peut consister à soumettre des objets contenus dans l'espace de travail à des conditions physiques déterminées, par exemple à une température comme indiqué précédemment ou à une pression déterminée, et/ou à des conditions chimiques déterminées, par exemple à une atmosphère contrôlée en CO₂ et en humidité.

De manière plus générale, si l'enceinte possède plusieurs étagères de support de récipients 20 divisant l'espace de travail 9 en plusieurs compartiments, une antenne 16 peut être disposée en regard de chaque compartiment de l'espace de travail 9, afin de permettre la localisation par le système 3 des échantillons dans l'espace de travail 9.

## Revendications

1. Ensemble du type comprenant :
- une enceinte (2) de traitement de matières ou d'échantillons biologiques comprenant elle-même des parois dont des surfaces intérieures délimitent un espace de travail (9), une face avant de l'enceinte délimitant une ouverture (10) d'accès à l'espace de travail qui peut être obturée et/ou libérée par une paroi (5) de l'enceinte, l'enceinte étant adaptée pour soumettre un objet placé dans l'espace de travail à au moins une condition physique ou chimique prédéterminée,
- un système (3) de communication d'informations par ondes radiofréquences comprenant au moins une antenne (16) portée par l'enceinte pour communiquer par ondes radiofréquences avec des objets (20) placés dans l'espace de travail et munis de moyens (22) d'émission et/ou de réception d'ondes radiofréquences, **caractérisé en ce que** l'antenne (16) est disposée à l'extérieur de l'espace de travail (9) et en est séparée par une partie (11, 24, 29) au moins d'une paroi (5), laquelle partie (11 ;24, 29) est transparente, au moins en regard de l'antenne, aux ondes radiofréquences utilisées par le système de communication.

2. Ensemble selon la revendication 1, **caractérisé en ce que** l'antenne (16) est disposée dans ladite paroi (5), ladite partie transparente étant une partie intérieure (11 ; 24, 29) de la paroi.

3. Ensemble selon la revendication 1, **caractérisé en ce que** l'antenne (16) est disposée à l'extérieur de ladite paroi (5), laquelle paroi est transparente sur toute son épaisseur aux ondes radiofréquences utilisées par le système de communication.

4. Ensemble selon la revendication 3, **caractérisé en ce que** l'antenne (16) est portée par ladite paroi (5).

5. Ensemble selon l'une des revendications précédentes, **caractérisé en ce que** ladite partie transparente (11 ; 24, 29) est mobile entre une position d'ouverture de l'enceinte, où la partie transparente libère l'ouverture (10) d'accès à l'espace de travail (9), et une position de fermeture de l'enceinte, où la partie transparente obture l'ouverture d'accès (10).

6. Ensemble selon la revendication 5, **caractérisé en ce que** ladite paroi (5) comprend deux portes mobiles (11, 12) dont une première porte intérieure (11) forme ladite partie transparente.

7. Ensemble selon l'une des revendications précédentes, **caractérisé en ce que** ladite partie transparente comprend une cloison (24) de séparation de l'antenne (16) de l'espace de travail et une couche (29) d'isolation thermique de l'antenne (16) de l'espace de travail.

8. Ensemble selon l'une des revendications précédentes, **caractérisé en ce que** l'enceinte est thermostatée.

## Claims

1. An assembly of the type comprising:
- an enclosure (2) for treating biological samples or materials and having walls whose interior surfaces delimit a working space (9), a front face of the enclosure delimiting an access opening (10) to the working space that can be closed and/or opened by a wall (5) of the enclosure, which is adapted to subject an object placed in the working space to at least one predetermined physical or chemical condition, and
- a system (3) for communicating information by radio waves and comprising at least one antenna (16) carried by the enclosure for communicating by radio waves with objects (20) placed in the working space and provided with means (22) for transmitting and/or receiving radio waves, which assembly is **characterised in that** the antenna (16) is outside the working space (9) and is separated therefrom by a portion (11, 24, 29) of at least one wall (5) which portion (11, 24, 29), at least in line with the antenna, is transparent to the radio waves used by the communication system.

2. An assembly according to claim 1, **characterised in that** the antenna (16) is inside said wall (5) and said transparent portion is an interior portion (11, 24, 29) of the wall.

3. An assembly according to claim 1, **characterised in that** the antenna (16) is outside said wall (5), which is transparent to the radio waves used by the communication system throughout its thickness.

4. An assembly according to claim 3, **characterised in that** the antenna (16) is carried by said wall (5).

5. An assembly according to any one of the preceding claims, **characterised in that** said transparent portion (11, 24, 29) is mobile between a position opening the enclosure, in which the transparent portion uncovers the access opening (10) to the working space (9), and a position closing the enclosure, in which the transparent portion closes the access opening (10).

6. An assembly according to claim 5, **characterised in that** said wall (5) comprises two mobile doors (11, 12) of which an interior first door (11) forms said transparent portion.

7. An assembly according to any one of the preceding claims, **characterised in that** said transparent portion comprises a partition (24) for separating the antenna (16) from the working space and a layer (29) for thermally insulating the antenna (16) from the working space.

8. An assembly according to any one of the preceding claims, **characterised in that** the enclosure is thermostatically controlled.

## Patentansprüche

1. Anordnung des Typs, welcher aufweist:
- eine Einfassung (2) zum Bearbeiten biologischer Materialien oder Proben, die Einfassung Wände aufweisend, deren Innenflächen einen Arbeitsraum (9) begrenzen, wobei eine Vorderseite der Einfassung eine Zugangs-Öffnung (10) zum Arbeitsraum begrenzt, welche durch eine Wand (5) der Einfassung verschlossen und/oder geöffnet werden kann, wobei die Einfassung derart eingerichtet ist, dass ein Objekt in dem Arbeitsraum wenigstens einer vordefinierten physikalischen oder chemischen Bedingung unterworfen werden kann,
- ein System (3) zur Kommunikation von Informationen mittels Radiofrequenzwellen, aufweisend mindestens eine von der Einfassung getragene Antenne (16) zur Kommunikation mittels Radiofrequenzwellen mit den in den Arbeitsraum eingebrachten und mit Vorrichtungen (22) zum Aussenden und/oder Empfangen von Radiofrequenzwellen versehenen Objekten (20), **dadurch gekennzeichnet, dass** die Antenne (16) außerhalb des Arbeitsraumes (9) angebracht, und von diesem durch eine Partie (11,24,29) von wenigstens einer Wand (5)getrennt ist, wobei die genannte Partie (11,24,29) wenigstens mit Blick auf die Antenne für die von dem Kommunikations-System verwendeten Radiofrequenzwellen transparent ist.

2. Anordnung gemäß Anspruch 1, **dadurch gekennzeichnet, dass** die Antenne (16) in der genannten Wand (5) angeordnet ist, wobei die genannte transparente Partie eine Innen-Partie (11;24,29) der Wand ist.

3. Anordnung gemäß Anspruch 1, **dadurch gekennzeichnet, dass** die Antenne (16) außerhalb der genannten Wand (5) angeordnet ist, wobei diese Wand in ihrer gesamten Dicke für die von dem Kommunikations-System verwendeten Radiofrequenzwellen transparent ist.

4. Anordnung gemäß Anspruch 3, **dadurch gekennzeichnet, dass** die Antenne (16) von der genannten Wand (5) gehalten ist.

5. Anordnung gemäß einem der vorhergehenden Ansprüchen, **dadurch gekennzeichnet, dass** die genannte transparente Partie (11;24,29) zwischen einer Öffnungs-Position der Einfassung, bei welcher die transparente Partie die Zugangs-Öffnung (10) zum Arbeitsraum (9) freigibt, und einer Verschluss-Position der Einfassung, bei welcher die transparente Partie die Zugangs-Öffnung (10) verschließt, bewegbar ist

6. Anordnung gemäß Anspruch 5, **dadurch gekennzeichnet, dass** die genannte Wand (5) zwei bewegbare Türen (11,12) aufweist, von denen eine erste, innere Tür (11) die genannte transparente Partie bildet.

7. Anordnung gemäß einem der vorhergehenden Ansprüchen, **dadurch gekennzeichnet, dass** die genannte transparente Partie eine Zwischenwand (24) zum Trennen der Antenne (16) von dem Arbeitsraum aufweist, sowie eine Lage (29) zur thermischen Isolation der Antenne (16) von dem Arbeitsraum.

8. Anordnung gemäß einem der vorhergehenden Ansprüchen, **dadurch gekennzeichnet, dass** die Einfassung temperaturgeregelt ist.
